# EUROPÄISCHE PATENTSCHRIFT

(11) **EP 2 088 314 B1**
(45) Veröffentlichungstag und Bekanntmachung des Hinweises auf die Patenterteilung: **03.06.2015**
(21) Anmeldenummer: 09001016.6
(22) Anmeldetag: 26.01.2009
(51) Int. Cl.: F03D 7/00, F03D 7/04

(54) **Vorrichtung zur Überwachung der Drehzahl bei einer Windenergieanlage**
Device for monitoring the rotational speed of a wind turbine
Dispositif pour la surveillance de la vitesse de rotation d'une éolienne

(30) Priorität: 05.02.2008 DE 102008007519
(43) Veröffentlichungstag der Anmeldung: 12.08.2009
(73) Patentinhaber: Nordex Energy GmbH, 22419 Hamburg (DE)
(72) Erfinder: Kabatzke, Wolfgang, 21502 Geesthacht (DE)
(74) Vertreter: Hauck Patentanwaltspartnerschaft mbB

(56) Entgegenhaltungen:
- EP-A1- 1 832 743
- WO-A2-2008/009354
- DE-U1- 8 717 506
- US-A1- 2005 276 696

## Beschreibung

Die vorliegende Erfindung betrifft eine Windenergieanlage mit einer Vorrichtung zur Überwachung einer Drehzahl dieser. Eine solche Vorrichtung wird gelegentlich auch als Drchzahlmonitor bezeichnet.

Der Triebstrang einer Windenergieanlage beginnt mit einem Rotor, der die Rotorblätter trägt. Der Rotor ist mit einer Rotorwelle verbunden, die an ein Getriebe gekoppelt ist. Die Rotorwelle wird gelegentlich auch als langsame Welle bezeichnet. Die Ausgangswelle des Getriebes mündet als Generatorwelle in den Generator und wird auch als schnelle Welle bezeichnet. Bei bekannten Windenergieanlagen ist eine Zahnscheibe auf der Rotorwelle angeordnet, die über induktive Impulsgeber Impulse erzeugt, deren Frequenz zu der Drehzahl der Rotorwelle proportional ist. Die Impulse werden durch ein Elektronikmodul ausgewertet. Die abgetasteten Impulse werden ebenfalls über einen Frequenz-Strom-Wandler (f-I-Wandler) in ein Stromsignal umgewandelt und gelangen in eine zentrale Steuerungseinheit der Windenergieanlage. In der zentralen Steuerungseinheit der Windenergieanlage ist eine kritische Abschaltdrehzahl hinterlegt. Sind die Drehzahlwerte der Rotorwelle oberhalb der hinterlegten Abschaltdrehzahl, so folgt ein geregeltes Herunterfahren der Windenergieanlage.

Als Nachteil an der Vorrichtung zur Drehzahlüberwachung hat sich herausgestellt, dass die Drehzahlüberwachung nicht eine ausreichende funktionale Sicherheit besitzt, insbesondere entspricht sie nicht einem Safety Integrity Level, wie es für sicherheitsgerichtete Anwendungen nach IEC 61508 erforderlich ist.

Aus EP 1 832 743 A1 ist ein Verfahren und eine Vorrichtung zur Steuerung der Rotordrehzahl bekannt. Das Verfahren sicht vor, das Drchmoment der Rotorwelle über das Drehmoment des elektrischen Generators mit Hilfe des Blatteinstellwinkels von mindestens einem Rotorblatt zu steuern und den Blatteinstellwinkel dabei im Wesentlichen konstant zu halten. Hierbei werden die Drehzahl der Rotorwelle und die Drehzahl der Generatorwelle alternativ zueinander ausgewertet.

Aus US 2005/0276696 A1 ist ein Verfahren und eine Vorrichtung zur Eisdetektion an einem Rotorblatt bekannt. Hierbei werden aufgenommene Drehzahlwerte ausgewertet, um an dem Rotorblatt eine einsetzende Eisbildung zu erkennen.

Der Erfindung liegt die Aufgabe zugrunde eine Windenergieanlage mit einer Vorrichtung zur Überwachung der Drehzahl bereitzustellen, die mit möglichst einfachen Mitteln eine ausreichende funktionale Sicherheit für die Anwendung bietet.

Erfindungsgemäß wird die Aufgabe durch eine Windenergieanlage mit den Merkmalen aus Anspruch 1 gelöst. Vorteilhafte Ausgestaltungen bilden die Gegenstände der Unteransprüche.

Die erfindungsgemäßeWindenergieanlage besitzt eine Vorrichtung, die zur Überwachung der Drehzahl bei der Windenergieanlage dient. Die Windenergicanlage weist eine von einem Rotor angetriebene Rotorwelle auf, die in einer Getriebeeinheit mündet. Ferner besitzt die Windenergieanlage eine Generatorwelle, die die Ausgangswelle der Getriebeeinheit mit einer Generator/Umrichtereinheit verbindet. Die Vorrichtung zur Überwachung der Drehzahl ist gekennzeichnet durch eine erste Drehzahlerfassungseinheit auf der Rotorwelle und eine zweite Drehzahlerfassungseinheit auf der Generatorwelle. Jede der beiden Drehzahlfassungseinheiten weist mindestens zwei unabhängig voneinander arbeitende Drehzahlsensoren auf. Zusätzlich ist eine Auswerteeinheit für die Drehzahl vorgesehen, an der die gemessenen Signale der Drehzahlerfassungseinheiten anliegen und die ein Fehlersignal für eine Überdrehzahl erzeugt, wenn ein vorbestimmter Maximalwert für die Drehzahl überschritten wird. Die erfindungsgemäße Windenergieanlage mit ihrer Vorrichtung zur Überwachung der Drehzahl besitzt eine

Reihe von Vorteilen. Zunächst wird die Drehzahl sowohl an der Rotorwelle als auch an der Generatorwelle erfasst, so dass bei einer Auswertung der gemessenen Drehzahlwerte eine genauere und zuverlässigere Auswertung der Messergebnisse erfolgen kann. Dabei versteht es sich, dass die Änderung der Drehzahl durch das Übersetzungsverhältnis an der Getriebeeinheit berücksichtigt ist, so dass bestimmte Maximalwerte für die Drehzahl sich entweder auf eine Drehzahl der Rotorwelle oder auf eine Drehzahl der Generatorwelle beziehen.

Die erfindungsgemäße Windenergieanlage kann mit ihrer Vorrichtung nicht nur eine Überdrehzahl in der Windenergieanlage feststellen, sondern zusätzlich auch Wellenfehler, wie beispielsweise Wellenbruch oder bestimmte Getriebefehler erkennen. In der erfindungsgemäßen Ausgestaltung vergleicht die Auswerteeinheit für die Drehzahl die gemessenen Werte der ersten Drehzahlerfassungseinheit unter Berücksichtigung der Getriebeübersetzung mit den gemessenen Werten der zweiten Drehzahlerfassungseinheit. Bei einer Abweichung der Drehzahlwerte um mindestens einen vorbestimmten Schwellwert, wird ein Fehlersignal für einen Wellenfehler erzeugt. Das Fehlersignal für den Wellenfehler zeigt an, dass die gemessenen Drehzahlen von Rotorwelle und Generatorwelle nicht in dem durch das Getriebe vorgegebenen Verhältnis zueinander stehen.

In einer bevorzugten Ausgestaltung ist die Auswerteeinheit mit einer Sicherheitskette für eine zentrale Steuerung der Windenergieanlage verbunden. Die Sicherheitskette einer Windenergieanlage bezeichnet eine Verbindung zu der Betriebsführung der Windenergieanlage, die ohne weitere Signalverarbeitung direkt zur elektrischen Steuereinheit und der Betriebsführung der Windenergieanlage führt und sicherheitsrelevante Steuersignale an die Betriebsführung weiterleiten kann. Die Sicherheitskette ist mit einer Betriebsmittelschalteinheit verbunden, die bei Auslösen der Sicherheitskette ein Abschalten der relevanten Betriebsmittel bewirkt und der Betriebsprüfung das Abschalten meldet. Die große Zuverlässigkeit der erfindungsgemäß vorgesehenen Auswerteeinheit für die Drehzahl erlaubt es, diese direkt an die Sicherheitskette anzuschließen, ohne dass eine weitere Signalverarbeitung dazwischen geschaltet ist.

In einer bevorzugten Ausgestaltung ist vorgesehen, dass die Auswerteeinheit für vorbestimmte Betriebszustände kein Fehlersignal zu einer Überdrehzahl und/oder einem Wellenfehler erzeugt. Obwohl für die vorbestimmten Betriebszustände vorgesehen ist, dass keine Fehlersignale erzeugt werden, kann gleichwohl eine Auswertung der gemessenen Drehzahlwerte erfolgen, um diese beispielsweise für eine Steuerung an der Windenergieanlage einzusetzen.

In einer bevorzugten Ausgestaltung ist jede Drehzahlerfassungseinheit mit mindestens zwei Drehzahlsensoren ausgestattet. Bevorzugt weist jeder Drehzahlsensor eine auf die Welle montierte Geberscheibe auf, deren Drehung optisch, mechanisch, elektrisch oder magnetisch erfasst wird. In der bevorzugten Ausgestaltung erfolgt sowohl an der Rotorwelle als auch an der Generatorwelle die Erfassung der Drehzahl mindestens doppelt. Auf diese Weise wird sichergestellt, dass bei Ausfall eines Drehzahlsensors weiterhin zuverlässig die Drehzahl an der Rotorwelle und an der Generatorwelle erfasst werden kann.

In einer bevorzugten Ausgestaltung ist die Geberscheibe als eine Zahnscheibe ausgebildet, die mindestens im Bereich ihrer Zähne mit einem hochwertigen Korrosionsschutz zum Schutz vor Umwelteinflüssen versehen ist. Herkömmliche Zahnscheiben besitzen häufig das Problem, dass durch Umwelteinflüsse, wie beispielsweise witterungsbedingte Feuchtigkeit, die Struktur der Zähne angegriffen wird, und es so zu Abweichungen in der Kontur der Zahnscheibe kommt. Solche Abweichungen führen dann zu systematischen Messfehlern bei der Erfassung der Drehzahlen.

Aufgrund der großen Genauigkeit der erfassten Drehzahl kann zusätzlich vorgesehen sein, dass die Auswerteeinheit für die Drehzahl einen aktuellen Ist-Wert für die Drehzahl der Generatorwelle und/oder der Rotorwelle an eine Steuerung für den Generator und/oder für einen Stromumrichter weiterleitet. Die erfindungsgemäße Windenergieanlage mit ihrer Vorrichtung zur Überwachung der Drehzahl erlaubt also zusätzlich, auch die gemessenen Drehzahlwerte für die Betriebsführung der Windenergieanlage und damit für die Steuerung der Generator/Umrichtereinheit einzusetzen.

Die Erfindung wird nachfolgend unter Bezug auf die Drehzablüberwachungsvorrichtung an einem Beispiel näher erläutert.

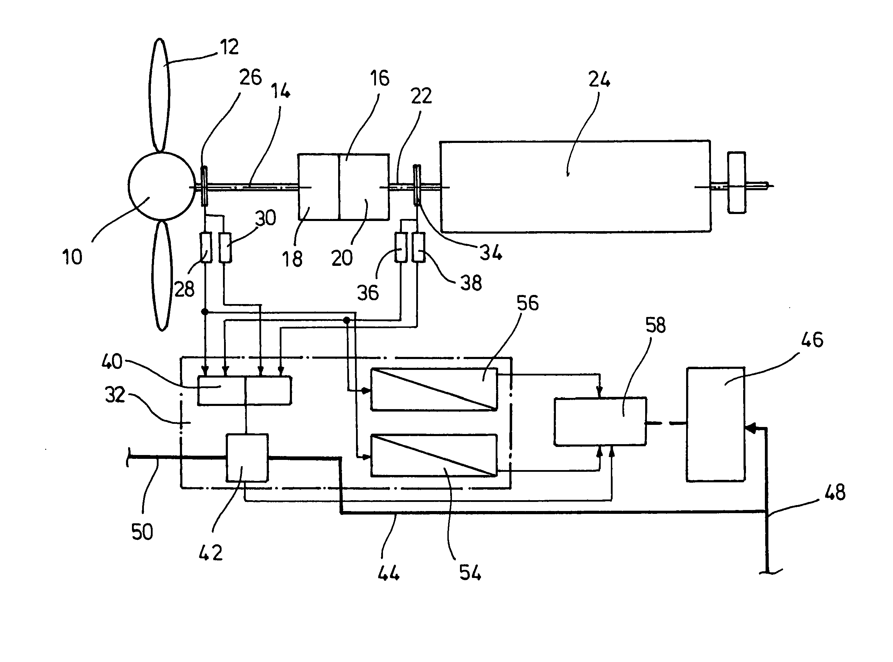

Die einzige Figur zeigt einen Rotor 10 in einer schematischen Ansicht mit zwei Rotorblättern 12. Der Rotor ist über eine Rotorwelle 14 mit einer

Getriebe-/Kupplungseinheit 16 verbunden. Die Getriebe-/Kupplungseinheit 16 besitzt ein Getriebe und kann eine Kupplung sowie weitere Bauteile aufweisen. In dem Getriebe erfolgt eine Umsetzung der Drehzahl, wobei die Drehzahl hochgesetzt wird. Die Ausgangswelle des Getriebes 20 ist über die Generatorwelle 22 mit dem Generator 24 verbunden. Generator 24 und ein Umrichter zur Umwandlung des erzeugten Stroms bilden gemeinsam die Generator/Umrichtereinheit

Auf der Rotorwelle 14 ist eine Drehzahlerfassungseinheit 26 vorgesehen. Die Drehzahlerfassungseinheit 26 besteht aus zwei unabhängig voneinander auf der Rotorwelle 14 angeordneten Zahnscheiben (nicht dargestellt), die eine radiale nach außen weisende Zahnung besitzen. Im Bereich der Zahnung sind die Zahnscheiben mit einer Schutzschicht versehen, die die Zähne vor Umwelteinflüssen schützt. Die beiden Signale der Zahnscheiben (nicht dargestellt) liegen über getrennte Kanäle 28, 30 an einer Auswerteeinheit an. Um eine ausreichende funktionale Sicherheit für die Sensorsignale der Rotorwelle zu bilden, werden die Zahnscheiben getrennt voneinander erfasst, wobei die Drehzahlsensoren jeweils eine eigene Stromversorgung und eigene Leitungen besitzen. Auch eine elektronische Aufbereitung und Verstärkung der Signale erfolgt jeweils unabhängig voneinander, so dass bei Ausfall einer Komponente noch ausreichende Sicherheit besteht.

In entsprechender Weise ist in der einzigen Figur auch die Drehzahlerfassungseinheit 34 an der Generatorwelle 22 dargestellt. Die Drehzahlerfassungseinheit 32 besitzt ebenfalls zwei unabhängig voneinander vorgesehene Zahnscheiben (nicht dargestellt), deren Drehung von zwei unabhängigen Sensoren ausgelesen wird. Die entsprechenden Sensoren werden unabhängig voneinander mit Strom versorgt und sind jeweils einzeln über die Kanäle 36 sowie 38 mit der zentralen Auswerteeinheit 32 verbunden.

Die Auswerteeinheit 32 besitzt ein Fehlererkennungsmodul 40, an dem die Ausgangssignale der Drehzahlsensoren anliegen. Das Modul 40 überprüft mit den vier anliegenden Signalen, welche Drehzahl anliegt. Wenn die Überdrehzahl mit Bezug auf die Generatorwelle 22 definiert ist, werden die beiden anliegenden Signale 28 und 30 von der Rotorwelle unter Berücksichtigung der Übersetzung des Getriebes 20 umgerechnet. Anschließend wird überprüft, ob einer der gemessenen Werte die vorgegebene maximale Drehzahl überschreitet. Wenn die maximale Drehzahl überschritten ist, dann wird ein Fehlersignal an ein Fehlermodul 42 der Auswerteeinheit 32 angelegt. Das Fehlersignal bewirkt, dass über eine direkte Verbindung 44 die Betriebsmittelschalteinheit 60 alle für den Anlagenzustand kritischen Betriebsmittel deaktiviert und parallel mit aktiver Unterstützung durch die zentrale Steuerung 46 ein gezieltes Herunterfahren der Winderegieanlage in einen sichereren Betriebszustand erfolgt. Die direkte Verbindung 44 mit der Betriebsmittelschalteinheit 60 wird als Sicherheitskette bezeichnet. Die zentrale Steuerung 46 kann keinen Einfluss auf die Sicherheitskette nehmen, denn sie wertet den Zustand der direkten Verbindung 44 nur lesend aus. Wie in der Figur zu erkennen, kann die Sicherheitskette auch direkt mit anderen sicherheitsrelevanten Einheiten verbunden sein. Die weiteren sicherheitsrelevanten Einheiten können unter Umgehung der Auswerteeinheit 32 ebenfalls direkt an der zentralen Steuerung 46 und der Betriebsmittelschalteinheit 60 anliegen, wie beispielsweise durch die Leitung 48 angedeutet, oder mit dem Anschluss 50 an Auswerteeinheit 32 anliegen und durch das Fehlermodul 42 hindurchgeleitet werden.

Zusätzlich zu der Erkennung einer Überdrehzahl, kann das Fehlererkennungsmodul 40 auch das Verhältnis der Drehzahl an der Rotorwelle mit der Drehzahl an der Generatorwelle vergleichen. Weicht das Verhältnis der Drehzahlen um mehr als einen vorbestimmten Schwellwert von dem vorgegebenen Übersetzungsverhältnis des Getriebes ab, so generiert das Fehlererkennungsmodul 40 ebenfalls ein Fehlersignal, das über das Fehlermodul 42 an die zentrale Steuerung 46 weitergeleitet wird. Der Schwellwert für die Erkennung eines Fehlers im Triebstrang kann beispielsweise bei 10 % des Übersetzungsverhältnisses liegen. Neben Getriebefehlern, die durch ein falsches Übersetzungsverhältnis zwischen den Drehzahlen erkennbar sind, kann das Fehlererkennungsmodul 40 auch einen Fehler im Triebstrang erkennen, der beispielsweise auf einen Bruch der Welle oder ein Abreißen einer Wellenbindung schließen lässt. Bei einem solchen Fehler liegt kein Wert für die Drehzahl der Generatorwelle vor.

Auch in diesem Falle wird ein Fehlersignal von dem Fehlermodul 42 in die Betriebsmittelschalteinheit 60 und in die zentrale Steuerung 46 (nur lesend und auswertend) weitergeleitet, welches ein Herunterfahren der Windenergieanlage in einen sicheren Zustand bewirkt. Zusätzlich zu dem Fehlererkennungsmodul 40 zur Auswertung der Signale und dem Fehlermodul 42 zum Absetzen der Fehlermeldung für die Betriebsmittelschalteinheit 60 und die zentrale Steuerung 46 besitzt die Auswerteeinheit 32 zwei Frequenz-Stromwandler (f-I-Wandler).

Die Frequenz-Stromwandler 54, 56 wandeln die anliegenden Frequenzsignale der Drehzahlsensoren in analoge Stromsignale um. In dem dargestellten Beispiel liegen jeweils nur die Frequenzsignale eines Sensors von der Rotorwelle und von der Generatorwelle an dem f-I-Wandler an. Grundsätzlich ist auch möglich, dass beide Drehzahlsensorsignale an dem über den f-I-Wandler anliegen. Es ist auch denkbar, dass gezielt zwischen den Drehzahlsensoren umgeschaltet (nicht dargestellt) werden kann.

Die Stromsignale der f-I-Wandler 54, 56 liegen an einem Umrechnungsmodul 58 an, das die entsprechenden Stromwerte in eine Drehzahl der Generatorwelle 22 umrechnet und an die zentrale Steuerung 46 der Windenergieanlage anlegt.

Im Betrieb der Windenergieanlage erfolgt die Steuerung des Generators und/oder des Umrichters durch die zentrale Steuerung 46 für die Betriebsführung bei aktiver Betriebsmittelschalteinheit 60, die den Betrieb der Windenergieanlage zulässt. Die für die Steuerung nötigen Werte zur Drehzahl der Generatorwelle 22 werden hierbei von dem Umrechnungsmodul 58 bereitgestellt.

## Patentansprüche

1. Windenergieanlage mit einer Vorrichtung zur Überwachung einer Drehzahl bei dieser, wobei die Windenergieanlage eine Rotorwelle (14), die von einem Rotor angetrieben wird und in eine Getriebeeinheit (16) mündet, eine Generatorwelle (22), die eine Ausgangswelle der Getriebeeinheit (16) mit einer Generator/Umrichtereinheit (24) verbindet,
- eine erste Drehzahlerfassungseinheit (26) für die Rotorwelle (14) und eine zweite Drehzahlerfassungseinheit (34) für die Generatorwelle (22),
- und eine Auswerteeinheit (32) für die Drehzahl, an der gemessene Signale (28, 30, 36, 38) der Drehzahlerfassungseinheiten (26, 34) anliegen und die ein Fehlersignal für eine Überdrehzahl erzeugt, wenn ein bestimmter Maximalwert für die Drehzahl überschritten ist. aufweist, **gekennzeichnet dadurch, dass** jede Drehzahlerfassungseinheit (26, 34) mindestens zwei unabhängig voneinander arbeitende Drehzahlsensoren aufweist, - und dass die Auswerteeinheit (32) für die Drehzahl die gemessenen Werte (28, 30, 36, 38) in der ersten Drehzahlerfassungseinheit (26) unter Berücksichtigung einer Getriebeübersetzung mit den gemessenen Werten der zweiten Drehzahlerfassungseinheit (34) vergleicht und bei einer Abweichung der Drehzahlwerte um mehr als einen vorbestimmten Schwellwert ein Fehlersignal für einen Wellenfehler erzeugt.

2. Windenergieanlage nach Anspruch 1, **dadurch gekennzeichnet, dass** die Auswerteeinheit mit einer Sicherheitskette (44) einer zentralen Steuerung (46) und/oder einer Betriebsmittelschalteinheit (60) der Windenergieanlage verbunden ist.

3. Windenergieanlage nach Anspruch 1 oder 2, **dadurch gekennzeichnet, dass** die Auswerteeinheit (32) für vorbestimmte Betriebszustände kein Fehlersignal zu einer Überdrehzahl und/oder einem Wellenfehler erzeugt.

4. Windenergieanlage nach einem der Ansprüche 1 bis 3, **dadurch gekennzeichnet, dass** jede Drehzahlerfassungseinheit (26, 34) mindestens zwei Geberscheiben aufweist.

5. Windenergieanlage nach Anspruch 4, **dadurch gekennzeichnet, dass** jeder Drehzahlsensor eine auf die Welle montierte Geberscheibe aufweist, deren Drehung optisch, mechanisch, elektrisch oder magnetisch erfasst wird.

6. Windenergieanlage nach einem der Ansprüche 1 bis 5, **dadurch gekennzeichnet, dass** als Geberscheibe eine Zahnscheibe vorgesehen ist, die mindestens im Bereich ihrer Zähne mit einem Korrosionsschutz überzogen ist.

7. Windenergieanlage nach einem der Ansprüche 1 bis 6, **dadurch gekennzeichnet, dass** die Auswerteeinheit (32) für die Drehzahl einen Ist-Wert für die Drehzahl der Generatorwelle (14) an eine Steuerung für den Generator und/oder für ihren Umrichter weiterleitet.

## Claims

1. Wind turbine comprising an apparatus for monitoring a rotational speed of said wind turbine, wherein the wind turbine comprises a rotor shaft (14) which is driven by the rotor and ends into a gear unit (16), a generator shaft (22) which connects an output shaft of the gear unit (16) with a generator/converter unit (24),
• a first rotational speed detection unit (26) for the rotor shaft (14) and a second rotational speed detection unit (34) for the generator shaft (22), and
• a processing unit (32) for the rotational speed, to which measured signals (28, 30, 36, 38) of the rotational speed detection units (26, 34) are applied and which is configured to generate an error signal for a rotational overspeed if a certain maximum value for the rotational speed is exceeded, **characterised in that** each rotational speed detection unit (26, 34) comprises at least two rotational speed sensors working independently of each other, and that the processing unit (32) for the rotational speed is configured to compare the measured values (28, 30, 36, 38) of the first rotational speed detection unit (26) with the measured values of the second rotational speed detection unit (34), taking into account a gear ratio, and to generate an error signal for a shaft defect if the rotational speed values differ by more than a predetermined threshold value.

2. Wind turbine according to claim 1, **characterised in that** the processing unit is connected to a safety chain (44) of a central controller (46) and/or to an operating equipment switching unit (60) of the wind turbine.

3. Wind turbine according to claim 1 or 2, **characterised in that** the processing unit (32) is configured to not generate an error signal related to a rotational overspeed and/or a shaft defect for predetermined operation conditions.

4. Wind turbine according to one of claims 1 to 3, **characterised in that** each rotational speed detection unit (26, 34) comprises at least two transducer discs.

5. Wind turbine according to claim 4, **characterised in that** each rotational speed sensor comprises a transducer disc mounted to the shaft, the rotation of which is acquired optically, mechanically, electrically or magnetically.

6. Wind turbine according to one of claims 1 to 5, **characterised in that** a toothed disc is provided as a transducer disc, which is coated with an anticorrosion agent at least in the region of its teeth.

7. Wind turbine according to any of claims 1 to 6, **characterised in that** the processing unit (32) for the rotational speed is configured to forward an actual value for the rotational speed of the generator shaft (14) to a controller of the generator/converter unit.

## Revendications

1. Éolienne avec un dispositif pour la surveillance d'une vitesse de rotation dans celle-ci, l'éolienne ayant un arbre de rotor (14), qui est entraîné par un rotor et débouche dans une unité de transmission (16), un arbre de générateur, (22), qui relie un arbre de sortie de l'unité de transmission (16) avec une unité générateur/convertisseur (24), l'éolienne comportant
• une première unité de détection de vitesse de rotation (26) pour l'arbre de rotor (14) et une deuxième unité de détection de vitesse de rotation (34) pour l'arbre de générateur (22), et
• une unité d'analyse (32) pour la vitesse de rotation, à laquelle des signaux mesurés (28, 30, 36, 38) des unités de détection de vitesse de rotation (26, 34) sont appliqués et qui génère un signal d'erreur pour une vitesse de rotation excessive quand une certaine valeur maximale pour la vitesse de rotation est dépassée,
**caractérisé en ce que**
• chaque unité de détection de vitesse de rotation (26, 34) comporte au moins deux capteurs de vitesse de rotation qui opèrent indépendamment l'une de l'autre, et que
• l'unité d'analyse (32) pour la vitesse de rotation compare les valeurs mesurés (28, 30, 36, 38) dans la première unité de détection de vitesse de rotation (26) avec les valeurs mesurés de la deuxième unité de détection de vitesse de rotation (34) en tenant compte d'une multiplication par la transmission, et génère un signal d'erreur pour un dysfonctionnement d'arbre quand les valeurs de vitesse de rotation différent de plus qu'une valeur de seuil prédéterminée.

2. Éolienne selon la revendication 1, **caractérisée en ce que** l'unité d'analyse est reliée à une chaine de sécurité (44) d'une unité de commande centrale (46) et/ou à une unité de commutation d'équipement d'opération (60) de l'éolienne.

3. Éolienne selon la revendication 1 ou 2, **caractérisée en ce que** pour des états de fonctionnement prédéterminés, l'unité d'analyse (32) ne génère pas un signal d'erreur concernant une vitesse de rotation excessive et/ou un dysfonctionnement d'arbre.

4. Éolienne selon l'une quelconque des revendications 1 à 3, **caractérisée en ce que** chaque unité de détection de vitesse de rotation (26, 34) comporte au moins deux disques capteurs.

5. Éolienne selon la revendication 4, **caractérisée en ce que** chaque capteur de vitesse de rotation comporte un disque capteur monté sur l'arbre, dont la rotation est détectée de manière optique, mécanique, électrique ou magnétique.

6. Éolienne selon l'une quelconque des revendications 1 à 5, **caractérisée en ce que** une roue dentée est pourvue comme disque capteur, qui est revêtue avec un agent anticoitosif.

7. Éolienne selon l'une quelconque des revendications 1 à 6, **caractérisée en ce que** l'unité d'analyse (32) pour la vitesse de rotation transmet une valeur réelle pour la vitesse de rotation de l'arbre du générateur (14) à un système de commande pour le générateur et/ou pour son convertisseur.
